# EUROPEAN PATENT APPLICATION

(11) **EP 2 413 613 A1**
(43) Date of publication of application: **01.02.2012**
(21) Application number: 11162909.3
(22) Date of filing: 18.04.2011
(51) Int. Cl.: H04N 21/458, H04N 21/433, H04N 21/4402

(54) **Broadcasting receiver**

(30) Priority: 27.07.2010 JP 2010168674
(71) Applicant: Kabushiki Kaisha Toshiba, Tokyo 105-8001 (JP)
(72) Inventor: Irie, Yutaka, Tokyo 105-8001 (JP); Sawa, Kazuhide, Tokyo 105-8001 (JP)
(74) Representative: Henkel, Breuer & Partner

(57) **Abstract**

In one embodiment, there is provided a broadcasting receiver. The broadcasting receiver includes: a broadcast signal receiver configured to receive broadcast signals of a plurality of channels; and a controller configured to: (i) display a first setting screen on a display module, wherein, through the first setting screen, two or more first channels including contents for simultaneous viewing are selected from the plurality of channels; and (ii) display a second setting screen on the display module, wherein, through the second setting screen, one or more second channels including contents for recording are selected from the first channels based on settings made on the first setting screen.

## Description

### BACKGROUND

### 1. Field

Embodiments described herein generally relates to a broadcasting receiver.

### 2. Description of the Related Art

There are broadcasting receivers capable of simultaneously receiving digital television broadcast signals of a plurality of channels, and allowing a viewer to select and determine, from the received broadcast signals of the respective channels, channels for simultaneous viewing and a channel for time-shift recording.

Specifically, in the foregoing broadcasting receiver, two or more channels for simultaneous viewing are selected from among the respective channels for which broadcast signals have been received, thereby allowing contents of the two or more channels to be simultaneously displayed as moving images on a display screen of a display device.

Further, the foregoing broadcasting receiver has the function of allowing the broadcast signals of the respective channels, selected as the channels for time-shift recording, to be recorded in a storage medium such as an internal hard disk device or a USB-connected hard disk device. Furthermore, this function allows recorded contents to be played back in a time-shift mode.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention:
FIG. 1 is a diagram showing an outer appearance of a digital television broadcasting receiver according to one embodiment , and a network system including the digital television broadcasting receiver;
FIG. 2 is a diagram illustrating a main signal processing system of the digital television broadcasting receiver;
FIG. 3 is a flowchart illustrating a flow of processing of the digital television broadcasting receiver in setting channels for simultaneous viewing and a channel for time-shift recording;
FIG. 4 is a diagram illustrating a display example of a root menu screen concerning function settings for digital terrestrial television broadcasting in the digital television broadcasting receiver;
FIG. 5 is a diagram illustrating a display example of a setting screen concerning selection and settings of channels for simultaneous viewing;
FIG. 6 is a diagram illustrating a display example of the setting screen concerning selection and settings of channels for simultaneous viewing, which is different from the display example shown in FIG. 5;
FIG. 7 is a diagram illustrating a display example of a setting screen for setting whether to perform time-shift recording;
FIG. 8 is a diagram illustrating a display example of a menu screen concerning function settings for time-shift recording;
FIG. 9 is a diagram illustrating a display example of a setting screen concerning selection and settings of a channel for time-shift recording;
FIG. 10 is a diagram illustrating a display example of a screen for prompting a viewer to select whether to allow time-shift recorded contents to be deleted;
FIG. 11 is a diagram illustrating a display example of a message screen in the course of execution of processing such as deletion of time-shift recorded contents;
FIG. 12 is a diagram illustrating a display example of a message screen when processing such as deletion of time-shift recorded contents has been completed;
FIG. 13 is a flowchart illustrating a flow of processing of the digital television broadcasting receiver in setting time-shift recording time and system maintenance time;
FIG. 14 is a diagram illustrating a display example of a setting screen concerning selection and settings of time-shift recording time;
FIG. 15 is a diagram illustrating a display example of a setting screen concerning selection and settings of time-shift recording time, which is different from the display example shown in FIG. 14;
FIG. 16 is a diagram illustrating a display example of a setting screen concerning a system maintenance time setting; and
FIG. 17 is a flowchart illustrating a flow of processing when contents of a currently viewed channel are played back from the start.

### DETAILED DESCRIPTION

According to exemplary embodiments of the present invention, there is provided a broadcasting receiver. The broadcasting receiver includes: a broadcast signal receiver configured to receive broadcast signals of a plurality of channels; and a controller configured to: (i) display a first setting screen on a display module, wherein, through the first setting screen, two or more first channels including contents for simultaneous viewing are selected from the plurality of channels; and (ii) display a second setting screen on the display module, wherein, through the second setting screen, one or more second channels including contents for recording are selected from the first channels based on settings made on the first setting screen. Here, the first channels are defined as a set of first channels, and the second channels are defined as a set of second channels.

Various embodiments of the invention will be described hereinafter with the accompany drawings.

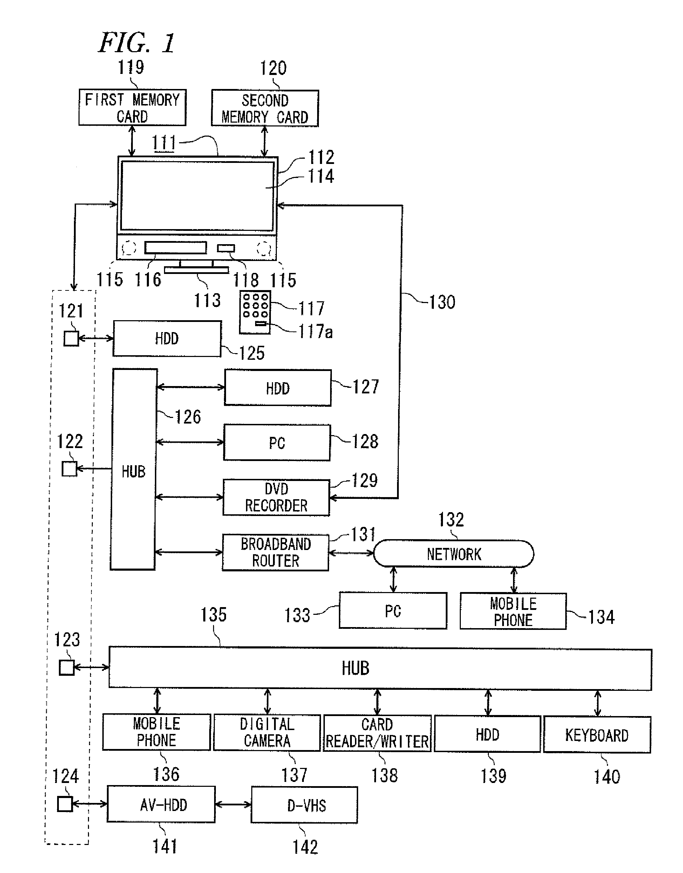

FIG. 1 schematically illustrates an outer appearance of a digital television broadcasting receiver 111 according to the present invention, and an example of a network system including this digital television broadcasting receiver 111.

Specifically, the digital television broadcasting receiver 111 mainly includes: a thin housing 112; and a support stand 113 for standing up and supporting this housing 112. Further, the housing 112 is equipped with components such as: a flat-panel video display device 114 including a liquid crystal display panel, for example; speakers 115; an operation module 116; and a light receiver 118 for receiving operational information transmitted from a remote controller 117.

Furthermore, a first memory card 119, examples of which include an SD (Secure Digital) memory card, an MMC (Multimedia Card) and a memory stick, is insertable into and removable from the digital television broadcasting receiver 111. and information including a program and a photograph is read and written by the first memory card 119.

Moreover, a second memory card (IC card) 120 in which contract information or the like, for example, is recorded is insertable into and removable from the digital television broadcasting receiver 111, and information is read and written by the second memory card 120.

Besides, the digital television broadcasting receiver 111 includes: a first LAN (Local Area Network) terminal 121; a second LAN terminal 122; a USB (Universal Serial Bus) terminal 123; and an i. LINK terminal 124.

Of those terminals, the first LAN terminal 121 is used as a port provided exclusively for a LAN-support HDD, and is used to record/play back information in/from a LAN-support HDD 125, which is a NAS (Network Attached Storage) connected to the first LAN terminal 12I, in accordance with Ethernet (registered trademark).

In this manner, the first LAN terminal 121, serving as a port exclusively used for a LAN-support HDD, is provided, thus allowing information of a HD quality program to be stably recorded in the HDD 125 without being influenced by other network environment, a network use status, etc.

Further, the second LAN terminal 122 is used as a general LAN-support port using Ethernet (registered trademark), and connected via a hub 126, for example, with devices such as a LAN-support HDD 127, a contents server (PC) 128 and a DVD (Digital Versatile Disk) recorder 129 containing a HDD. The second LAN terminal is used to transmit information between the digital television broadcasting receiver 111 and these devices.

The contents server 128 functions to operate as a server device for contents in a domestic network, and is further configured as a UPnP (Universal Plug and Play)-support device including service for providing URI (Uniform Resource Identifier) information necessary for access to contents.

Since digital information communicated via the second LAN terminal 122 is information for only a control system, the DVD recorder 129 is provided with a dedicated analog transmission path 130 for transmission of analog video and sound information between the DVD recorder 129 and the digital television broadcasting receiver 111.

Moreover, the second LAN terminal 122 is connected to a network 132 such as the Internet, for example, via a broadband router 131 connected to the hub 126, and is used to transmit information between the digital television broadcasting receiver 111 and devices such as a contents server (PC) 133 and a mobile phone 134 via the network 132.

The contents server 133 serves as a server device for contents, and is further configured as a UPnP-support device including service for providing URI information necessary for access to contents.

Furthermore, the USB terminal 123 is used as a general USB-support port, and connected via a hub 135, for example, with USB devices such as a mobile phone 136, a digital camera 137, a card reader/writer 138 for a memory card, a HDD 139 and a keyboard 140. The USB terminal 123 is used to transmit information between the digital television broadcasting receiver 111 and these USB devices.

Besides, the i. LINK terminal 124 is serially connected with devices such as an AV-HDD 141 and a D (Digital)-VHS (Video Home System) 142, for example, and is used to transmit information between the digital television broadcasting receiver 111 and these devices.

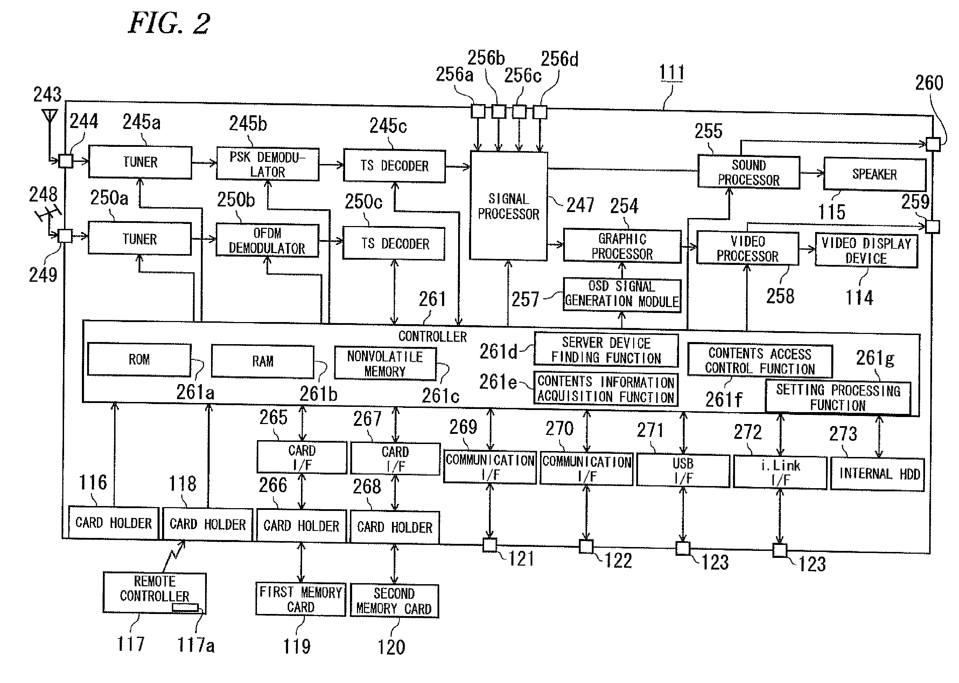

FIG. 2 illustrates a main signal processing system of the above-described digital television broadcasting receiver 111.

Specifically, a satellite digital television broadcast signal received by a BS/CS digital broadcasting receiving antenna 243 is supplied via an input terminal 244 to a tuner 245a including one or a plurality of tuners for satellite digital broadcasting.

In accordance with a control signal provided from a controller 261, the tuner 245a selects a broadcast signal of a desired channel, and outputs the selected broadcast signal to a PSK (Phase Shift Keying) demodulator 245b.

In accordance with a control signal provided from the controller 261, the PSK demodulator 245b demodulates the broadcast signal selected by the tuner 245a, obtains a transport stream including a desired program, and outputs the obtained transport stream to a TS decoder 245 c.

In accordance with a control signal provided from the controller 261, the TS decoder 245c performs TS decoding processing on the signal multiplexed by the transport stream (TS) and outputs, to an STD buffer (not shown) 247f within a signal processor 247, a PES (Packetized Elementary Stream) obtained by depacketing digital video and sound signals of the desired program.

Further, the TS decoder 245c outputs, to a section processor (not shown) 247h within the signal processor 247, section information sent by digital broadcasting.

Furthermore, a digital terrestrial television broadcast signal received by a terrestrial broadcasting receiving antenna 248 is supplied via an input terminal 249 to a tuner 250a including a plurality of tuners for digital terrestrial television broadcasting.

In accordance with a control signal provided from the controller 261, the tuner 250a selects a broadcast signal of a desired channel, and outputs the selected broadcast signal to an OFDM (Orthogonal Frequency Division Multiplexing) demodulator 250b.

In accordance with a control signal provided from the controller 261, the OFDM demodulator 250b demodulates the broadcast signal selected by the tuner 250a, obtains a transport stream including a desired program, and outputs the obtained transport stream to a TS decoder 250c.

In accordance with a control signal provided from the controller 261, the TS decoder 250c performs TS decoding processing on the signal multiplexed by the transport stream (TS) and outputs, to the STD buffer within the signal processor 247, a PES (Packetized Elementary Stream) obtained by depacketing digital video and sound signals of the desired program.

Moreover, the TS decoder 250c outputs, to the section processor within the signal processor 247, section information sent by digital broadcasting.

During TV viewing, the signal processor 247 selectively performs given digital signal processing on the digital video and sound signals supplied from the TS decoder 245c and the TS decoder 250c, and outputs the resulting signals to a graphic processor 254 and a sound processor 255. Further, during contents playback, the signal processor 247 selects a contents playback signal received by the controller 261, performs given digital signal processing thereon, and outputs the resulting signal to the graphic processor 254 and the sound processor 255.

The controller 261 receives various data for program acquisition, electronic program guide (EPG) information, program property information (including program category and the like), caption information (including service information [SI] and/or program specific information [PSI]) from the signal processor 247.

The controller 261 performs image generation processing for displaying an EPG and a caption from the received information mentioned above, and outputs the generated image information to the graphic processor 254.

From the section information received from the TS decoders 245c and 250c, the section processor within the signal processor 247 outputs, to the controller 261, various data for program acquisition, electronic program guide (EPG) information, program property information (including program category and the like), caption information (including service information [SI] and/or program specific information [PSI]), etc.

The graphic processor 254 has the functions of combining: (1) a digital video signal supplied from an AV decoder (not shown) within the signal processor 247; (2) an OSD signal generated by an OSD (On Screen Display) signal generation module 257; (3) image data provided by data broadcasting; and (4) an EPG and a caption signal generated by the controller 261, and outputting the resulting signal to a video processor 258.

Further, when a caption provided by closed-caption broadcasting is displayed, the graphic processor 254 performs a process for superimposing caption information on a video signal based on caption information provided in accordance with control carried out by the controller 261.

A digital video signal outputted from the graphic processor 254 is supplied to the video processor 258. The video processor 258 converts the received digital video signal into an analog video signal of a format displayable on the video display device 114. Then, the video processor 258 outputs the converted signal to the video display device 114 to display a video thereon, and also outputs the converted signal to the outside via an output terminal 259.

Furthermore, the sound processor 255 converts the received digital sound signal into an analog sound signal of a format that can be played back on the speakers 115. Then, the sound processor 255 outputs the converted signal to the speakers 115 to play back a sound, and also outputs the converted signal to the outside via an output terminal 260.

All operations of this digital television broadcasting receiver 111, including various receiving operations mentioned above, are controlled by the controller 261 in a centralized manner. The controller 261 contains a CPU (Central Processing Unit) or the like, receives operational information from the operation module 116 (see FIG. 1) or receives, via the light receiver 118, operational information from the remote controller 117, and controls each module so that operational details are reflected.

In this case, the controller 261 mainly utilizes: a ROM (Read Only Memory) 261a that stores a control program executed by the CPU; a RAM (Random Access Memory) 261b that provides a work area to the CPU; and a nonvolatile memory 261c that stores various setting information, control information, etc.

Further, the controller 261 is connected via a card I/F (Interface) 265 to a card holder 266 into which the first memory card 119 is insertable. Thus, the controller 261 is capable of transmitting, via the card 1/F 265, information between the controller 261 and the first memory card 119 inserted into the card holder 266.

In addition, the controller 261 is connected via a card 1/F 267 to a card holder 268 into which the second memory card 120 is insertable. Thus, the controller 261 is capable of transmitting, via the card I/F 267, information between the controller 261 and the second memory card 120 inserted into the card holder 268.

The controller 261 is connected to the first LAN terminal 121 via a communication I/F 269. Thus, the controller 261 is capable of transmitting, via the communication I/F 269, information between the controller 261 and the LAN-support HDD 125 connected to the first LAN terminal 121. In this case, the controller 261 has a DHCP (Dynamic Host Configuration Protocol) server function, and allocates an IP (Internet Protocol) address to the LAN-support HDD 125, connected to the first LAN terminal 121, so as to control the LAN-support HDD 125.

The controller 261 is connected to the second LAN terminal 122 via a communication I/F 270. Thus, the controller 261 is capable of transmitting, via the communication I/F 270, information between the controller 261 and each device (see FIG. 1) connected to the second LAN terminal 122.

The controller 261 is connected to the USB terminal 123 via a USB I/F 271. Thus, the controller 261 is capable of transmitting, via the USB 1/F 271, information between the controller 261 and each device (see FIG. 1) connected to the USB terminal 123.

The controller 261 is connected to the i. LINK terminal 124 via the i. LINK I/F 272. Thus, the controller 261 is capable of transmitting, via the i. LINK I/F 272, information between the controller 261 and each device (see FIG. 1) connected to the i. LINK terminal 124.

The controller 261 is connected to an internal HDD 273. Thus, the controller 261 is capable of recording, in the internal HDD 273, a received image or an image captured from outside, and reading the image recorded in the internal HDD 273.

In the present embodiment, the internal HDD 273 stores and retains registration files describing storage IDs (including IP addresses and device names) allocated to the internal HDD 273, the HDD 125, the HDD 127, the contents server 128 and the DVD recorder 129. In the present embodiment, an apparatus includes the internal HDD 273 and capable of recording contents in a recording medium.

Besides, the controller 261 may allow the storage IDs of the internal HDD 273, the HDD 125, the HDD 127, the contents server 128 and the DVD recorder 129 to be stored in the nonvolatile memory 261c.

Further, the controller 261 includes: (1) a server device finding function 261d that utilizes UPnP; (2) a contents information acquisition function 261e that utilizes UPnP; (3) a contents access control function 261f; and (4) a setting processing function 261g.

(1) By means of the server device finding function 261 d, the controller 261 finds out a UPnP-support device on the network with the use of a UPnP discovery function. For example, the server device finding function 261d finds out the contents server 128 with the use of the UPnP discovery function.

(2) By means of the contents information acquisition function 261e, the controller 261 controls the UPnP-support device with the use of a UPnP control function, and acquires URI information required for access to contents within the UPnP-support device. For example, the contents information acquisition function 261e controls the contents server 128, and acquires, from the contents server 128, URI information required for access to contents stored in a HDD within the contents server 128.

(3) By means of the contents access control function 261f, the controller 261 determines approval or disapproval for access to contents based on: server device IP address information acquired by the server device finding function 261 d; IP address information obtained from the URI information acquired by the contents information acquisition function 261e; the IP address allocated to the LAN terminal 122 of the digital television broadcasting receiver 111; and a netmask. Then, when access approval is determined, the controller 261 gives approval for access to contents, but when access disapproval is determined, the controller 261 allows a message indicating that the access cannot be approved to be displayed on the video display device 114 with OSD.

(4) The controller 261 reads screen data stored in the ROM 261a and setting data stored in the nonvolatile memory 261c, and controls the OSD signal generation module 257 and the graphic processor 254, thereby enabling display of various setting screens on a display screen of the video display device 114. Thus, the controller 261 is capable of displaying, on the display screen of the video display device 114, a menu screen concerning various function settings, a setting screen concerning selection and settings of channels for simultaneous viewing, a setting screen concerning selection and settings of a channel for time-shift recording, a setting screen concerning selection and settings of recording time, a setting screen concerning selection and settings of system maintenance execution time, a confirmation screen, etc., for example. Further, when settings of the various setting screens are updated, for example, the controller 261 overwrites the setting data in the nonvolatile memory 261c with updated setting data and operates each module of the digital television broadcasting receiver 111 in accordance with the data stored in the nonvolatile memory 261c hy means of the setting processing function 2G1 g.

Furthermore, the controller 261 is allowed to read information regarding copy protection of contents recorded in each module, and to modify copy protection information of the respective contents when necessary.

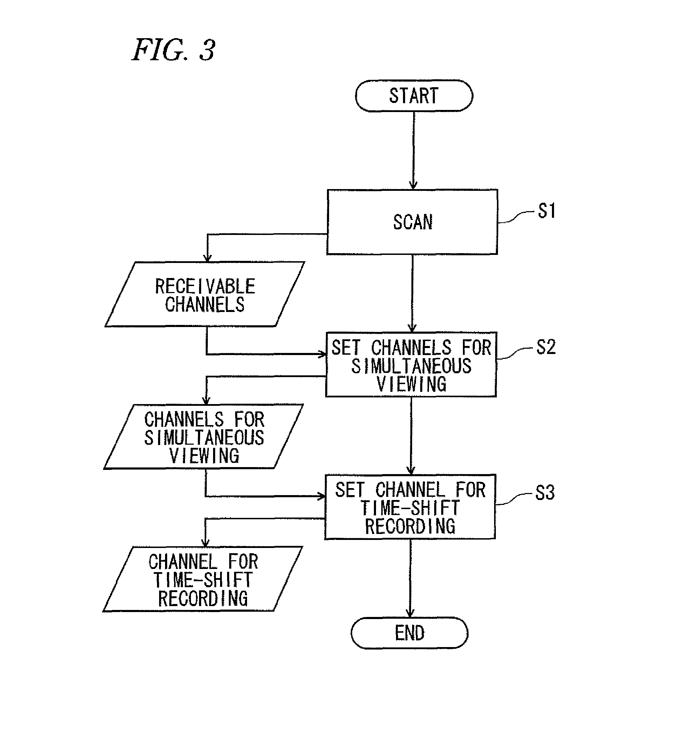

Next, details of the present embodiment implemented as described above when channels for simultaneous viewing and a channel for time-shift recording are set will be described mainly with reference to FIGS. 3 to 9. FIG. 3 illustrates a flow of processing carried out in the digital television broadcasting receiver 111 in setting channels for simultaneous viewing and a channel for time-shift recording.

Actually, the digital television broadcasting receiver 111 is configured to receive broadcast signals of digital television broadcasting by the antenna 248, and to sequentially store, in a storage medium such as the internal HDD 273, the broadcast signals of one or a plurality of desired channels selected by the tuner 250a. Moreover, the digital television broadcasting receiver 111 is configured to allow, with an operation of each module such as the controller 261, contents corresponding to the broadcast signals stored in the storage medium to be viewed within a given period of time decided in accordance with a capacity or the like of the storage medium. Therefore, operations, processing, etc. of the respective modules of the digital television broadcasting receiver 111, carried out in accordance with the above-described configuration, will be generically referred to as ``time-shift recording" for the sake of convenience.

First, in Step S1 of FIG. 3, the controller 261 controls the module such as the tuner 250a to allow a scanning operation to be performed, thereby detecting channels for which digital terrestrial television broadcast signals are receivable. Then, the controller 261 1 stores the detection results in the nonvolatile memory 261c.

Subsequently, in Step S2 of FIG. 3, the controller 261 reads, from the nonvolatile memory 26 1 c, the detection results obtained in Step S1 of FIG. 3, thereby to set channels for simultaneous viewing.

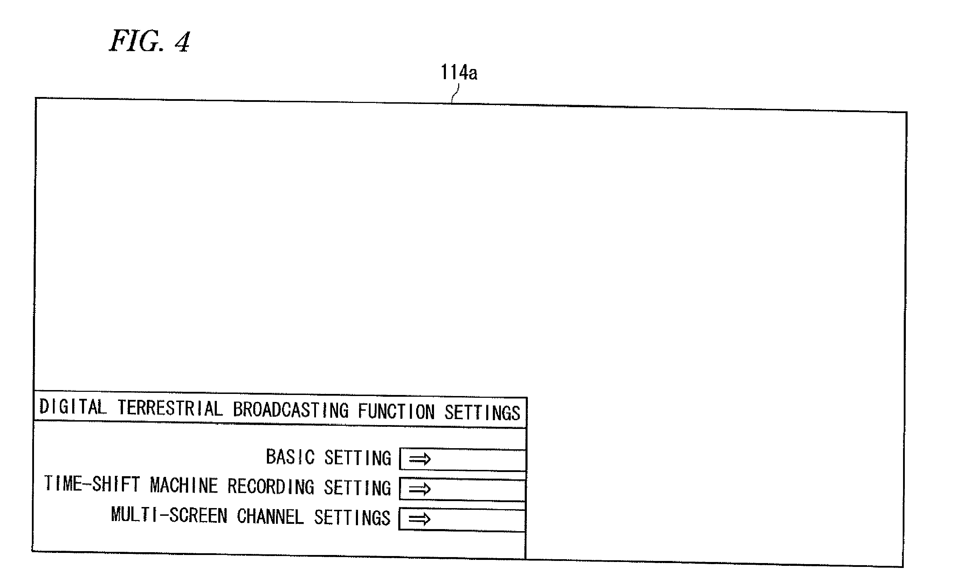

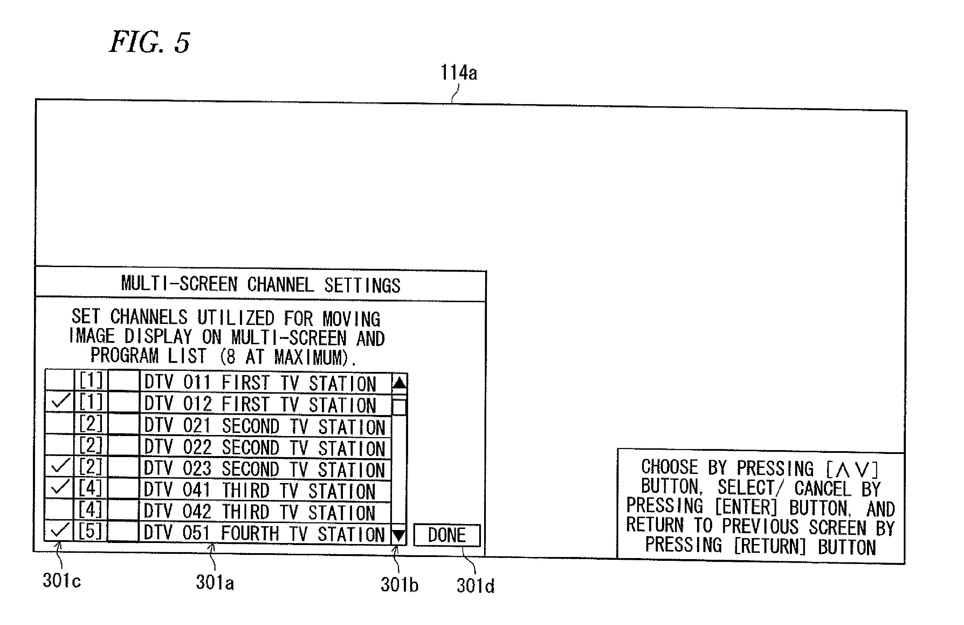

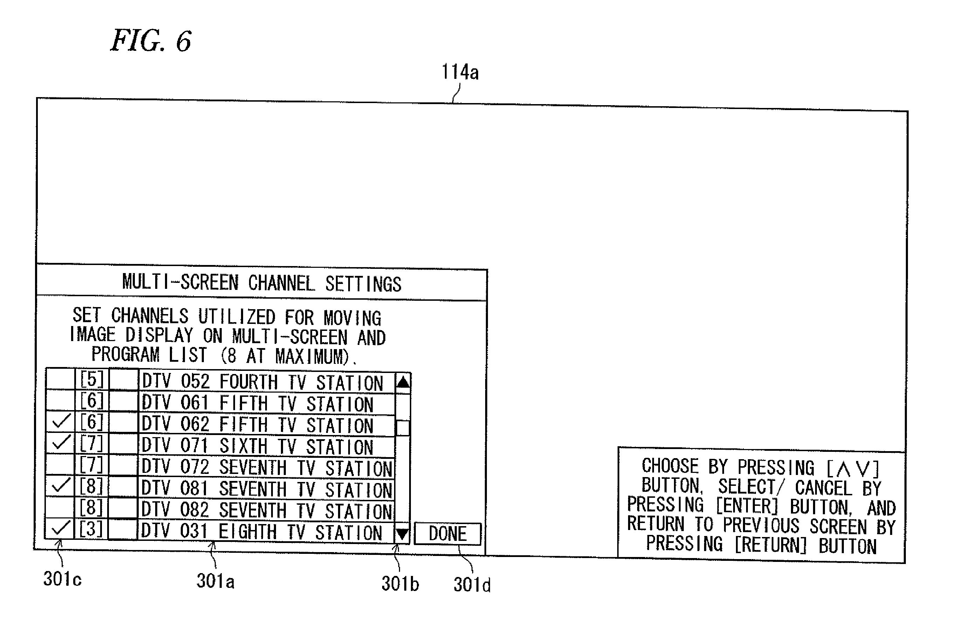

Hereinafter, specific examples of processing and operations in Step S2 of FIG. 3 will be described. FIG. 4 illustrates a display example of a root menu screen concerning function settings for digital terrestrial television broadcasting in the digital television broadcasting receiver 111. FIGS. 5 and 6 each illustrate a display example of a setting screen concerning selection and settings of channels for simultaneous viewing.

Based on operational information transmitted in response to an operation performed on a "SETTING MENU" button or the like provided on the remote controller 117, the controller 261 allows the root menu screen concerning function settings for digital terrestrial television broadcasting, such as one illustrated in FIG. 4, for example, to be displayed on a display screen 114a of the video display device 114.

The root menu screen illustrated in FIG. 4 has a menu display on which selection buttons for ``BASIC SETTING", "MULTI-SCREEN CHANNEL SETTING" and "TIME-SHIFT MACHINE RECORDING SETTING" are displayed.

Moreover, based on operational information transmitted in response to an operation performed on a '`MULTI-SCREEN" button or the like provided on the remote controller 117, the controller 261 detects the selection of the ``MULTI-SCREEN CHANNEL SETTING" selection button on the root menu screen of FIG. 4, and then allows the setting screen concerning selection and settings of channels for simultaneous viewing, such as one illustrated in FIG. 5, for example, to be displayed on the display screen 114a of the video display device 114.

On the setting screen ("MULTI-SCREEN CHANNEL SETTING") illustrated in FIGS. 5 and 6, each channel obtained as the detection result in Step S 1 of FIG. 3, i.e., each channel for which a digital terrestrial television broadcast signal is receivable, is provided in a receivable channel list 301 a.

On the setting screen shown in FIGS. 5 and 6, a scroll bar 301b is located in the vicinity of the receivable channel list 301a so that the receivable channel list 301a is scrolled up and down in response to operations performed on arrow button provided on the remote controller 117, thereby allowing a viewer to confirm each channel obtained as the detection result in Step S1 of FIG. 3. Therefore, the viewer can change the display state of the receivable channel list 301a from one illustrated in FIG. 5 to one illustrated in FIG. 6 by operating the arrow button of the remote controller 117. On the other hand, the viewer can change the display state of the receivable channel list 301 a from one illustrated in FIG. 6 to one illustrated in FIG. 5 by operating the arrow button of the remote controller 117.

On the setting screen shown in FIGS. 5 and 6, a check box 301c is provided for each of the channels in the receivable channel list 301a so that the viewer can select channels for simultaneous viewing from among the respective channels provided in the receivable channel list 301a. Therefore, the viewer presses the "ENTER" button of the remote controller 117 to check or uncheck the check boxes 301c associated with the respective channels of the receivable channel list 301a. Thus, the viewer is allowed to individually select, from the receivable channel list 301a, channels for simultaneous viewing and channels that are not for simultaneous viewing.

In the receivable channel list 301a illustrated in each of FIGS. 5 and 6, the check boxes 301c are provided for both of "DTV 011" and "DTV 012" of "FIRST TV STATION", for example. In other words, simultaneous viewing and non-simultaneous viewing can be set for the different channels of the same TV station.

Further, in the receivable channel list 301a illustrated in each of FIGS. 5 and 6, up to eight check boxes 301c can be checked in this embodiment. In other words, the eight channels can be set for simultaneous viewing at the maximum. The maximum number of channels settable for simultaneous viewing depends on the number of tuners provided in the tuners 245a and 250a, and is information stored in advance in the nonvolatile memory 261c. Therefore, the maximum number of channels settable for simultaneous viewing is not limited to eight, but may be increased or reduced as appropriate depending on the number of tuners provided in the tuners 245a and 250a.

In this embodiment, the controller 261 allows a message indicating that an inappropriate setting is made (e.g., a message indicating that "channel is not specified'", "no more channels can be specified", etc.) to be displayed with OSD, for example, when information on the maximum number of channels settable for simultaneous viewing is read from the nonvolatile memory 261c and no check box 301c is checked, and when the number of the checked check boxes 301c is equal to or larger than a given number (e.g., when the nine check boxes 301c are checked).

Furthermore, based on an operation performed on a given button of the remote controller 117, the controller 261 detects selection of a setting completion button 301d included in the setting screen illustrated in FIGS. 5 and 6; then, the controller 261 sets, as the channel for simultaneous viewing, each channel for which the associated check box 301c is checked, and stores the resulting settings in the nonvolatile memory 261c.

In Step S2 of FIG. 3, the settings made for the channels for simultaneous viewing are not limited to those reflected when moving images are simultaneously displayed on a multi-screen channel display, but may be those reflected when moving images are displayed together with an electronic program guide (EPG), for example, or may be those reflected when moving images of a program of a current channel (current broadcasting) and moving images of a program in the same time slot on a different channel are simultaneously displayed on a main screen and a sub-screen, respectively.

On the other hand, in Step S3 of FIG. 3, the controller 261 reads, from the nonvolatile memory 261c, the channels for simultaneous viewing set in Step S2 of FIG. 3, thereby to set the channel for time-shift recording.

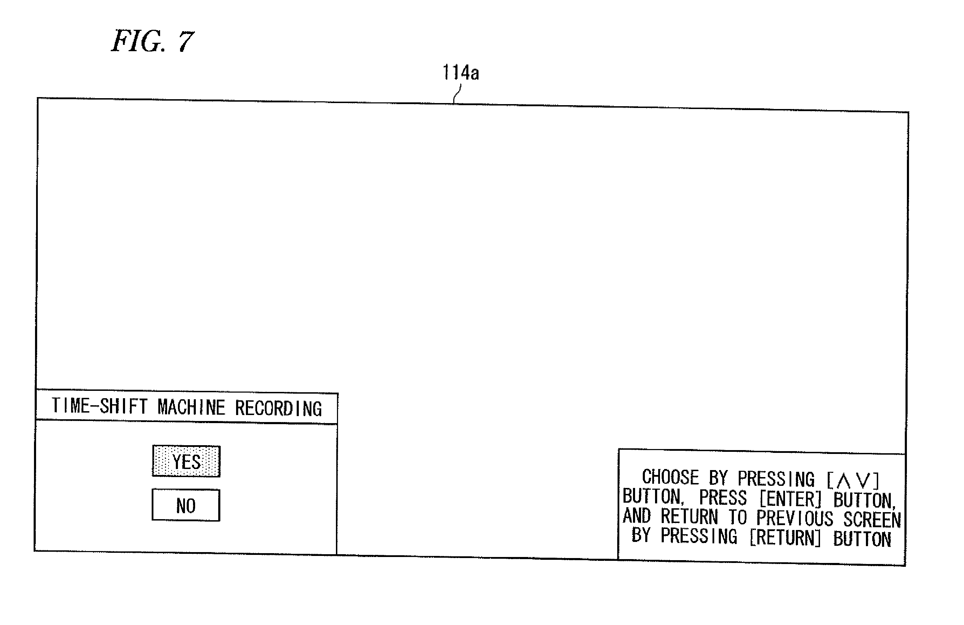

Hereinafter, specific examples of processing and operations in Step S3 of FIG. 3 will be now described. FIG. 7 illustrates a display example of a setting screen for setting whether to perform time-shift recording.

Based on operational information transmitted in response to an operation performed on a "TIME-SHIFT" button or the like provided on the remote controller 117, the controller 261 detects selection of the "TIME-SHIFT MACHINE RECORDING SETTING" selection button on the root menu screen of FIG. 4, and then allows the setting screen for setting whether to perform time-shift recording, such as one illustrated in FIG. 7, for example, to be displayed on the display screen 114a of the video display device 114.

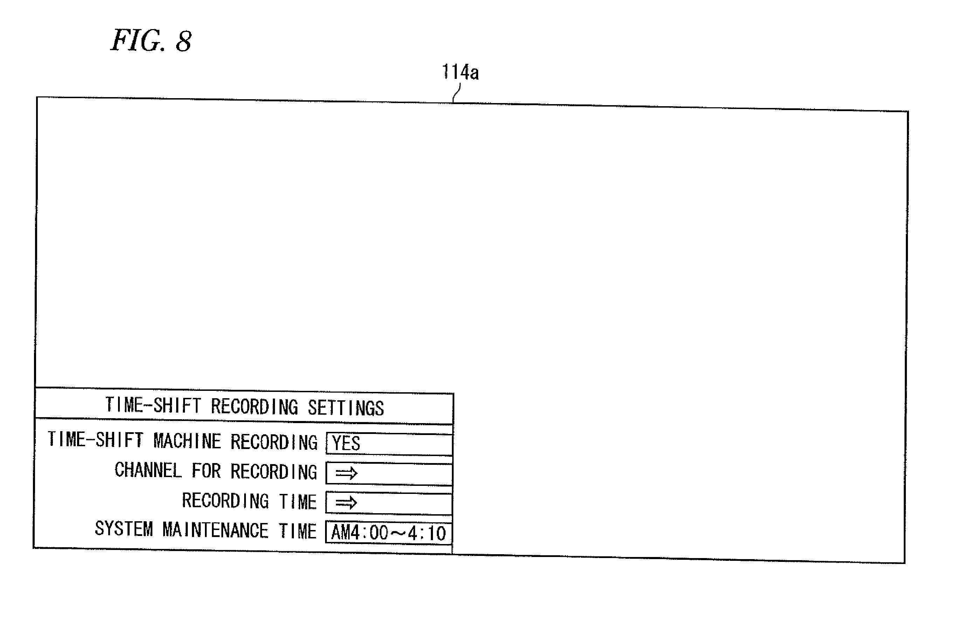

FIG. 8 illustrates a display example of a menu screen concerning function settings for time-shift recording.

Furthermore, based on operational information transmitted in response to an operation performed on the arrow button, "ENTER" button, etc. provided on the remote controller 117, the controller 261 detects the operation performed on the "ENTER" button of the remote controller 117 in a state in which a "go"/"no-go" decision is made on whether to perform time-shift recording on the setting screen of FIG. 7, and then the controller 261 allows the menu screen concerning function settings for time-shift recording, such as one illustrated in FIG. 8, for example, to be displayed on the display screen 114a of the video display device 114.

The menu screen of FIG. 8 has selection buttons for ``TIME-SHIFT MACHINE RECORDING", "RECORDING CHANNEL", "RECORDING TIME" and "SYSTEM MAINTENANCE TIME".

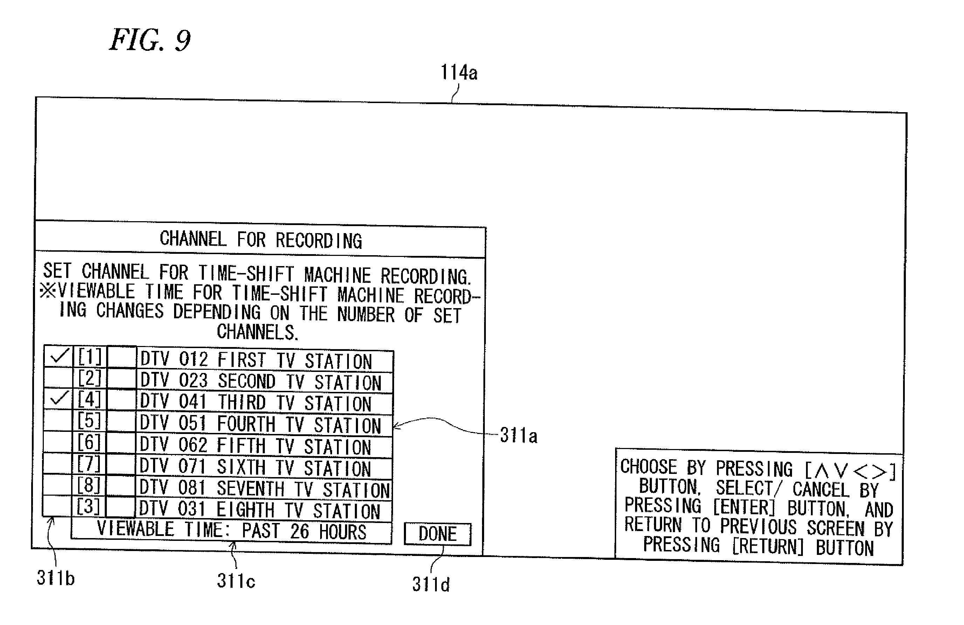

FIG. 9 illustrates a display example of a setting screen concerning selection and settings of a channel for time-shift recording.

Moreover, based on operational information transmitted in response to an operation performed on a given button provided on the remote controller 117, the controller 261 detects selection of the "RECORDING CHANNEL" selection button on the menu screen of FIG. 8, and then allows the setting screen concerning selection and settings of a channel for time-shift recording, as shown in FIG. 9, for example, to be displayed on the display screen 114a of the video display device 114. The setting screen illustrated in FIG. 9 will not be displayed during operation of time-shift recording.

On the setting screen ("RECORDING CHANNEL") illustrated in FIG. 9, each channel set in Step S2 of FIG. 3, i.e., each channel set for simultaneous viewing, is provided in a recording channel list 311a.

On the setting screen illustrated in FIG. 9, a check box 311b is provided for each of channels in the recording channel list 311a so that the viewer can select the channel for time-shift recording from among the respective channels provided in the recording channel list 311a. Therefore, the viewer presses the arrow button, "ENTER" button, etc. of the remote controller 117 to check or uncheck the check boxes 311b associated with the respective channels of the recording channel list 311a. Thus, the viewer is allowed to individually select, from the recording channel list 311a, the channel for time-shift recording and the channel that is not for time-shift recording.

In this embodiment, the controller 261 allows a message indicating that an inappropriate setting is made (e.g., a message saying that "channel is not specified") to be displayed with OSD, for example, when none of the check boxes 311b are checked.

On the setting screen illustrated in FIG. 9, a message box 311c for notifying the viewer of contents viewable time (storable period) of each channel to be time-shift recorded is located in the vicinity of the recording channel list 311a. Specific processing in this case is as follows. For example, the controller 261 performs a computation using: a detection result on a capacity of the internal HDD 273; the number of channels for which the check boxes 311b are checked; and a given bit rate set in advance for time-shift recording. Moreover, the controller 261 performs control for displaying, in the message box 311c, a character string or the like responsive to the computation result, thereby making it possible to notify the viewer of the above-mentioned viewable time (storable period).

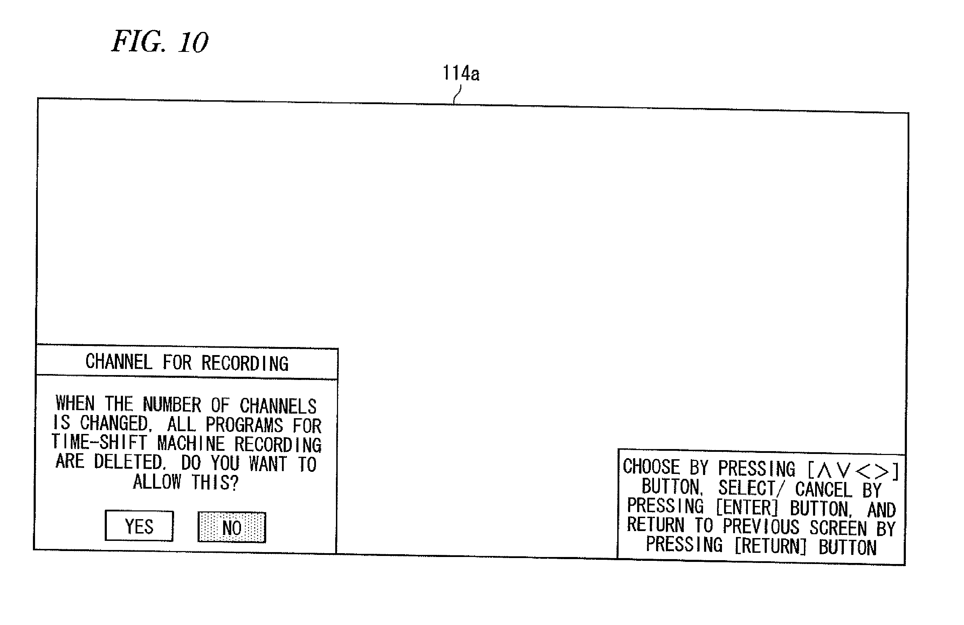

FIG. 10 illustrates a display example of a screen for prompting the viewer to select whether to allow time-shift recorded contents to be deleted.

Meanwhile, immediately after a setting completion button 311d included in the setting screen illustrated in FIG. 9 has been selected based on an operation performed on a given button of the remote controller 117, the controller 261 compares the original settings stored in the nonvolatile memory 261 c with new settings made on the setting screen illustrated in FIG. 9. Then, upon detection of a change in the number of channels for time-shift recording based on the comparison result, the controller 261 allows display of the screen for prompting the viewer to select whether to allow contents time-shift recorded in the internal HDD 273 to be deleted.

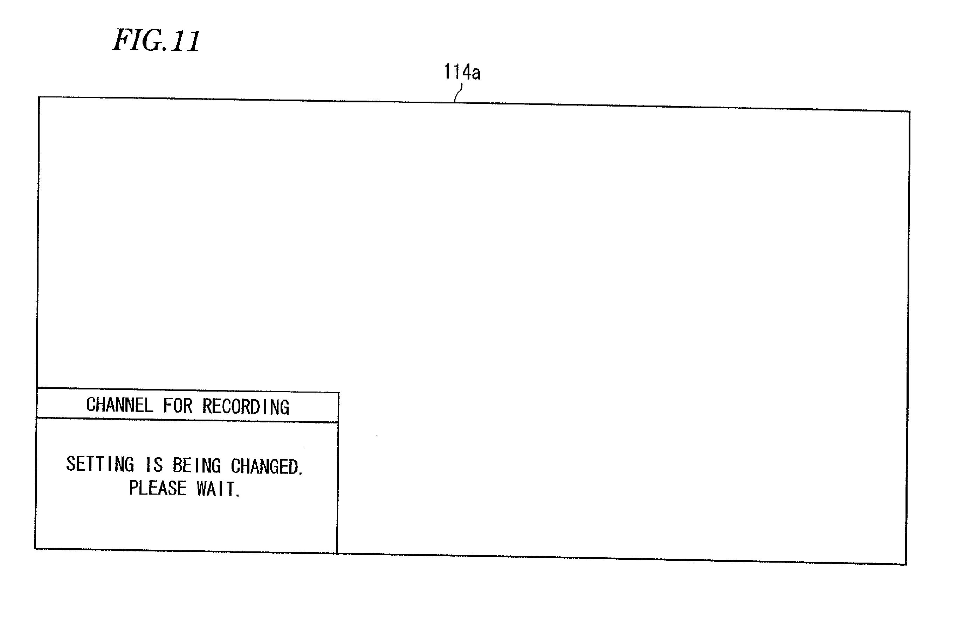

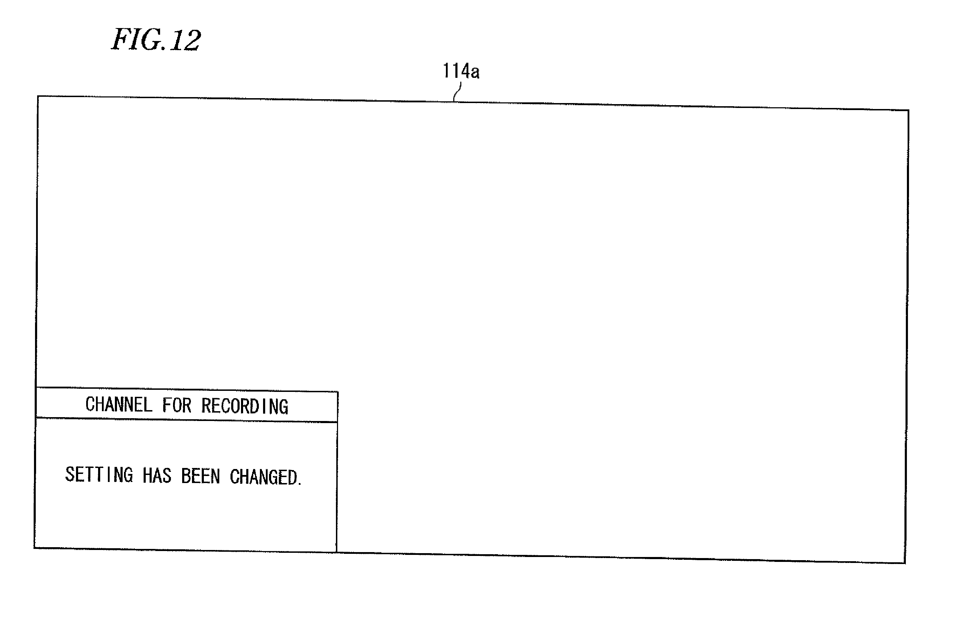

FIG. 11 illustrates a display example of a message screen in the course of execution of processing such as deletion of time-shift recorded contents. FIG. 12 illustrates a display example of a message screen when processing such as deletion of time-shift recorded contents has been completed.

When "NO" is selected on the screen illustrated in FIG. 10 based on an operation performed on a given button of the remote controller 117, the controller 261 abandons the new settings made on the setting screen illustrated in FIG. 9, and controls each module so that the original settings stored in the nonvolatile memory 261c are applied. On the other hand, when "YES" is selected on the screen illustrated in FIG. 10 based on an operation performed on a given button of the remote controller 117, the controller 261 stores, in the nonvolatile memory 261c, the new settings made on the setting screen illustrated in FIG. 9, deletes time-shift recorded contents by formatting the internal HDD 273, and further allows the message screen indicating that theses processes are in the course of execution to be displayed on the display screen 114a of the video display device 114. Of the character strings to be displayed on the message screen of FIG. 11, the character string "SETTING IS BEING CHANGED" will be displayed as blinking blue characters. Then, upon completion of the foregoing processes, the controller 261 allows the message screen of FIG. 12 to be displayed on the display screen 114a of the video display device 114.

The internal HDD 273 does not necessarily have to be formatted by the controller 261 when the channel for time-shift recording is changed. For example, the internal HDD 273 does not have to be formatted when it is detected that a partition state in the interval HDD 273 is not changed although the channel for time-shift recording is changed. Besides, when it is detected that a partition state in the internal HDD 273 is not changed although the channel for time-shift recording is changed and it is also detected that the same channel is set before and after the channel for time-shift recording is changed, time-shift recorded contents of the same channel does not have to be deleted.

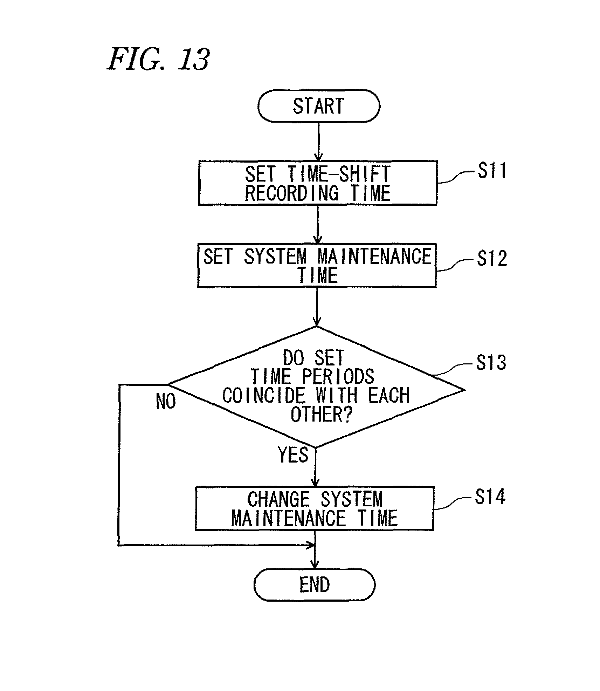

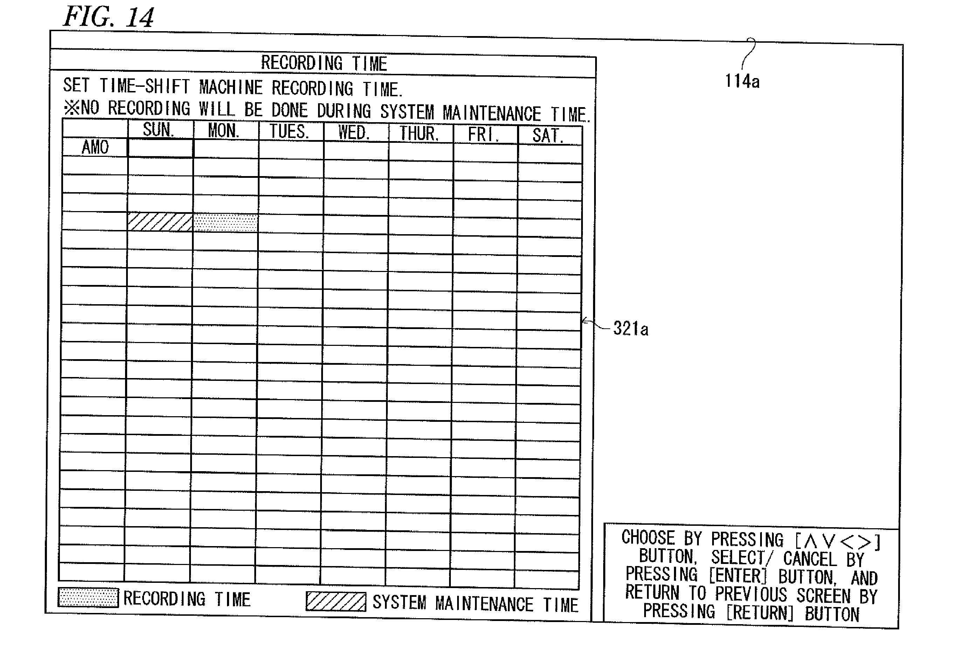

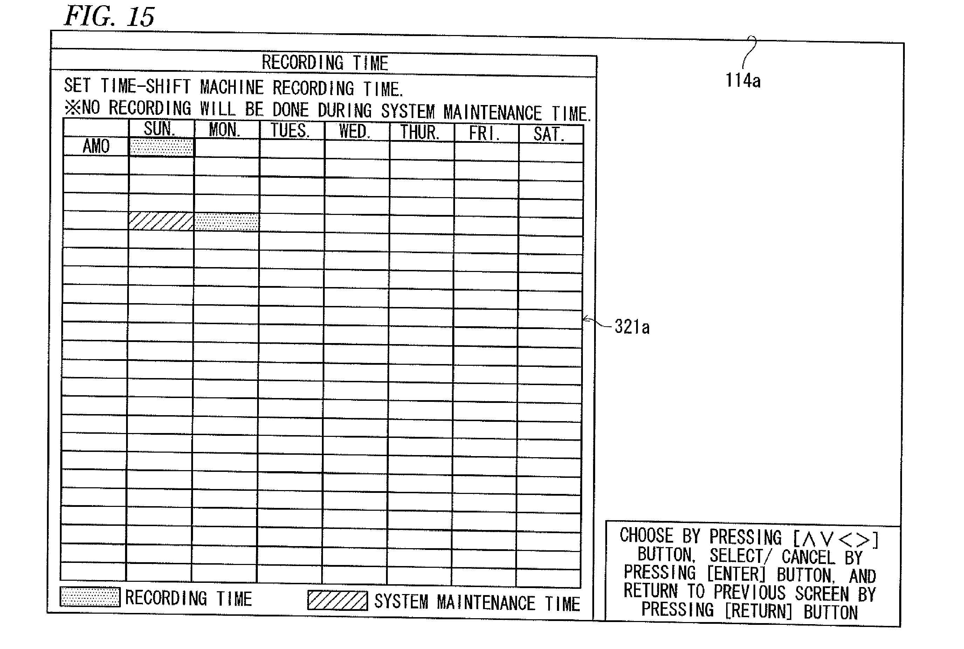

Next, details of the present embodiment implemented as described above when time-shift recording time and system maintenance time are set will be described mainly with reference to FIGS. 13 to 16. FIG. 13 illustrates a general outline of a flow of processing carried out in the digital television broadcasting receiver 111 in setting time-shift recording time and system maintenance time. FIG. 14 illustrates a display example of a setting screen concerning selection and settings of time-shift recording time. And FIG. 15 illustrates a display example of a setting screen concerning selection and settings of time-shift recording time, which is different from the display example of FIG. 14.

First, in Step S11 of FIG. 13, based on operational information transmitted in response to an operation performed on a given button provided on the remote controller 117, the controller 261 detects selection of the "RECORDING TIME" selection button on the menu screen of FIG. 8, and then allows the setting screen concerning selection and settings of time-shift recording time, such as one illustrated in FIG. 14 (and FIG. 15), for example, to be displayed on the display screen 114a of the video display device 114. The setting screen illustrated in each of FIGS. 14 and 15 will not be displayed during operation of time-shift recording.

On the setting screen illustrated in each of FIGS. 14 and 15, there is provided a time table 321a for selecting and setting a time period and a day of the week for time-shift recording. As illustrated in FIGS. 14 and 15, the time table 321a is provided as a table in which a plurality of OSD buttons or the like are arranged in a matrix. Further, in the time table 321a of the setting screen illustrated in each of FIGS. 14 and 15, for example, time periods of a day from 0:00 a.m. to 12:00 p.m. are arranged and displayed (on an hourly basis) along a direction of a longitudinal axis at a left end of the matrix, and days of the week from Sunday to Saturday are arranged and displayed along a direction of a horizontal axis at an upper end of the matrix. Therefore, the viewer presses the arrow button, "ENTER" button, etc. of the remote controller 117 while looking at the time table 321 a, thereby moving a thick-frame cursor; thus, the viewer can select a time period and a day of the week for time-shift recording, and can allow a time period and a day of the week, which have already been selected for time-shift recording, to enter an unselected state. Then, when a time period and a day of the week for time-shift recording are newly selected on the time table 321a illustrated in FIG. 14, for example, as a result of the above-described operation, the OSD button corresponding to the time period and the day of the week is highlighted as illustrated in FIG. 15. Furthermore, when the time period and the day of the week, which have already been highlighted, are selected on the time table 321 a illustrated in FIG. 15, for example, as a result of the foregoing operation, highlighting of the OSD button corresponding to the time period and the day of the week is cancelled as illustrated in FIG. 14.

According to the present embodiment, the time table 321a may be provided with an OSD button on which "ALL" is written, for example, so as to allow the viewer to select whether or not to perform time-shift recording collectively for all time periods and days of the week. Moreover, according to the present embodiment, the time table 321 a may be provided so that when the setting screen illustrated in FIG. 14 or FIG. 15 is displayed, either the foregoing OSD button on which "ALL" is written or the OSD button at the leftmost end and uppermost end of the time table 321a is brought into focus (surrounded by the thick-frame cursor illustrated in each of FIGS. 14 and 15).

On the other hand, according to the present embodiment, the time table 321a may be provided so that the OSD button corresponding to one of the time periods arranged and displayed in the time table 321 a is selected, thereby making it possible to select whether or not to perform time-shift recording for the one of the time periods of all days of the week. Besides, according to the present embodiment, the time table 321 a may be provided so that the OSD button corresponding to one of days of the week arranged and displayed in the time table 321 a is selected, thereby making it possible to select whether or not to perform time-shift recording for all time periods of the one of the days of the week.

Further, based on an operation performed on a given button provided on the remote controller 117, the controller 261 detects that settings of time period(s) and day(s) of the week for time-shift recording on the time table 321a are determined, and then stores the determined settings in the nonvolatile memory 261c.

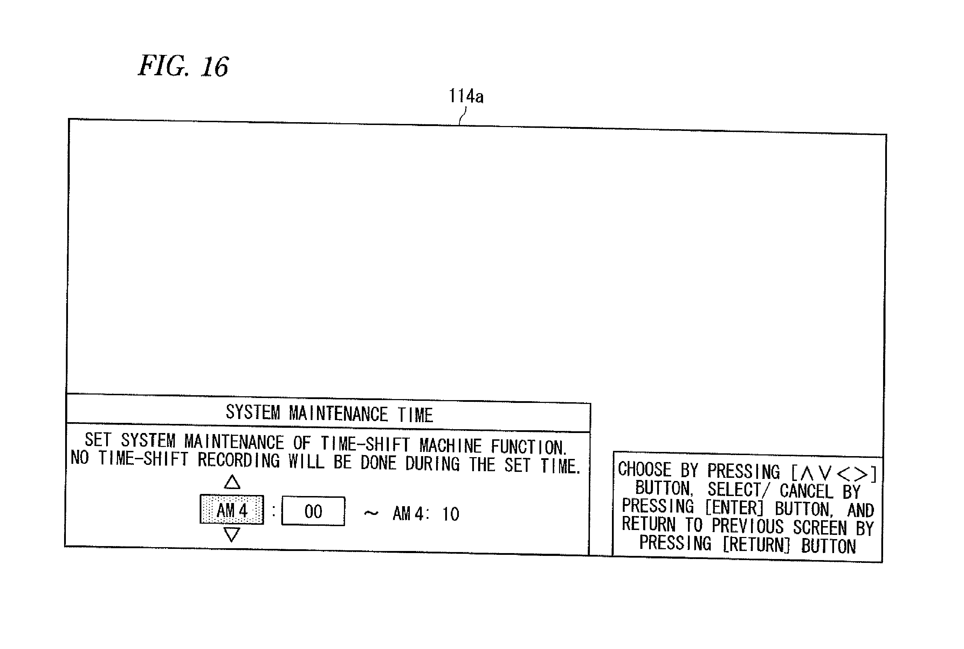

FIG. 16 illustrates a display example of a setting screen concerning a system maintenance time setting.

In Step S12 of FIG. 13, based on operational information transmitted in response to an operation performed on a given button provided on the remote controller 117, the controller 261 detects selection of the "SYSTEM MAINTENANCE TIME" selection button on the menu screen of FIG. 8, and then allows the setting screen concerning a system maintenance time setting, as shown in FIG. 16, for example, to be displayed on the display screen 114a of the video display device 114. The setting screen illustrated in FIG. 16 will not be displayed during operation of time-shift recording.

The setting screen ("SYSTEM MAINTENANCE TIME") illustrated in FIG. 16 is provided so as to allow the viewer to individually select digits of "hour" and "minute" of a start time for system maintenance, and to allow a time point after a lapse of a given period of time (e.g., 10 minutes) from the changed start time to be set and displayed as an ending time point for system maintenance. The setting screen illustrated in FIG. 16 is provided so that only one of "00", "10", "20", "30" "40" and "50", for example, is displayed in the digits of "minute". Therefore, the viewer presses the arrow button, "ENTER" button, etc. of the remote controller 117 while looking at the setting screen illustrated in FIG. 16, thereby individually changing the digits of "hour" and "minute"; thus, the viewer can set the start time for system maintenance on a 10-minute basis.

Based on an operation performed on a given button provided on the remote controller 117, the controller 261 detects that settings of starting and ending time points for system maintenance on the setting screen illustrated in FIG. 16 are determined, and then stores the determined settings in the nonvolatile memory 261c.

Furthermore, when the setting screen illustrated in each of FIGS. 14 and 15 is generated and displayed, the controller 261 reads the time-shift recording time settings and the system maintenance time settings, stored in the nonvolatile memory 261c, in combination, thereby highlighting a time period selected for time-shift recording and a time period including both of starting and ending time points for system maintenance (i.e., a system maintenance execution time period) together in the time table 321a so that these time periods are visually distinguished from each other.

In the present embodiment, during the time set as the system maintenance time, operations and processing concerning maintenance, including at least a restart of the digital television broadcasting receiver 111, are controlled by the controller 261. Therefore, the necessity to temporarily stop operations concerning time-shift recording arises in the course of execution of system maintenance.

To this end, in Step S13 of FIG. 13, the controller 261 reads the settings stored in the nonvolatile memory 261 c, thereby determining whether or not the time period set for time-shift recording and the time period set as the time between starting and ending time points of system maintenance coincide with each other.

Further, upon detection that the foregoing two time periods do not coincide with each other at all in Step S13 of FIG. 13, the controller 261 allows system maintenance of the digital television broadcasting receiver 111 to be performed during the time between the starting and ending time points of system maintenance stored in the nonvolatile memory 261c. On the other hand, upon detection that the foregoing two time periods at least partially coincide with each other in Step S13 of FIG. 13, the controller 261 subsequently performs the process of Step S 14 of FIG. 13.

In Step S14 of FIG. 13, the controller 261 rewrites the starting and ending time points of system maintenance stored in the nonvolatile memory 261c, thereby moving the system maintenance time to the other time period that does not coincide with the time period set for time-shift recording. In this case, the settings of the system maintenance time stored in the nonvolatile memory 261c are changed, and therefore, the time period to be highlighted as the system maintenance execution time period in the time table 321 a is concurrently changed.

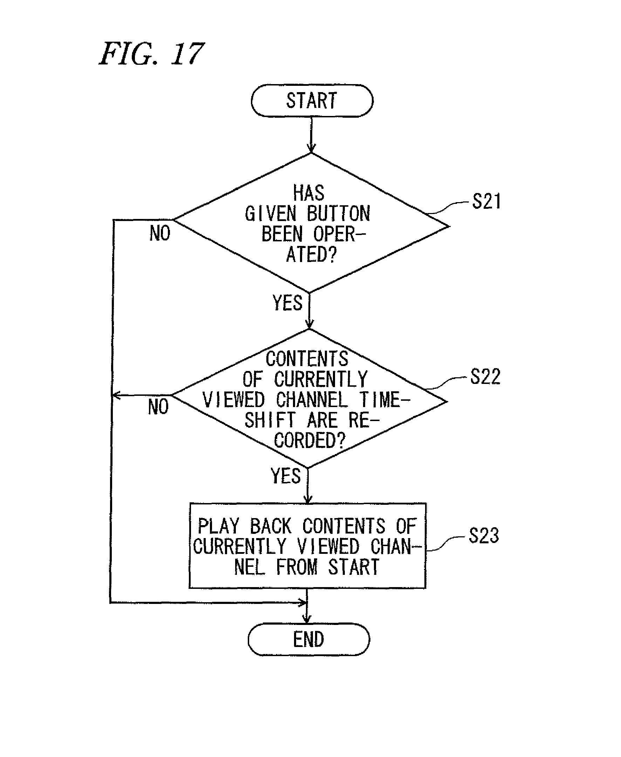

FIG. 17 illustrates a process flowchart when contents of a currently viewed channel are played back from the start.

Meanwhile, in Step S21 of FIG. 17, the controller 261 determines whether or not an operation has been performed on a button 117a such as "JUMP TO START", for example, provided on the remote controller 117.

Moreover, in Step S22 of FIG. 17, based on operational information transmitted in response to an operation performed on the button 117a, the controller 261 performs processing such as reading of settings concerning time-shift recording (which include a setting for determining whether or not the currently viewed channel is a channel for time-shift recording and a setting for a time period for time-shift recording), for example, from the nonvolatile memory 261c, thereby determining whether or not contents of the currently viewed channel are time-shift recorded contents.

Then, in Step S23 of FIG. 17, the controller 261 controls each module of the digital television broadcasting receiver 111 to play back the time-shift recorded contents of the currently viewed channel from the beginning (i.e., play back the contents from the start).

Specifically, the button 117a such as "JUMP TO START" is operated (or pressed) in the course of viewing of contents of a desired channel (i.e., in the course of displaying of contents of a desired channel on the display screen 114a of the video display device 114), thereby playing back the currently viewed contents in a time-shift mode from a time-shift recording start time. Operations or the like concerning such time-shift playback are set on the assumption that the contents of the desired channel for which the button 117a is pressed is time-shift recorded; in addition, the operations concerning such time-shift playback are performed only when at least part of the contents is time-shift recorded, but are not performed in other cases. Furthermore, when the operations concerning the foregoing time-shift playback are not performed, a character string such as "No operation is allowed", for example, will be displayed on the display screen 114a of the video display device 114.

As described above, according to the present embodiment, a channel for time-shift recording is selectable from among channels selected for simultaneous viewing. Therefore, according to the present embodiment, desired contents that have been time-shift recorded can be stored as long as possible, and selection and settings of channels for simultaneous viewing and a channel for time-shift recording can be made with ease.

V/hile certain embodiments have been described, these embodiments have been presented by way of example only, and are not intended to limit the scope of the invention. Indeed, the novel methods and systems described herein may be embodied in a variety of other forms. Furthermore, various omissions, substitutions and changes in the form of the methods and systems described herein may be made without departing from the sprit of the invention. The accompanying claims and their equivalents are intended to cover such forms or modifications as would fall within the scope and sprit of the invention.

## Claims

1. A broadcasting receiver comprising:
a broadcast signal receiver configured to receive broadcast signals of a plurality of channels; and
a controller configured to:
(i) display a first setting screen on a display module, wherein, through the first setting screen, two or more first channels including contents for simultaneous viewing are selected from the plurality of channels; and
(ii) display a second setting screen on the display module, wherein, through the second setting screen, one or more second channels including contents for recording are selected from the first channels based on settings made on the first setting screen.

2. The receiver of claim 1,
wherein the controller is configured to display a storable period of the contents for recording on the second setting screen, the storable period being determined based on the number of the second channels.

3. The receiver of claim 1,
wherein the controller is configured to:
(iii) display a third setting screen on the display module, wherein a first time period and a day of the week for recording is set through the third setting screen.

4. The receiver of claim 3,
wherein a second time period for maintenance of the broadcasting receiver is displayed on the third setting screen.

5. The receiver of claim 4,
wherein the controller is configured to:
(iv) display a fourth setting screen on the display module, wherein a start time for the maintenance of the broadcasting receiver is set through the fourth setting screen.

6. The receiver of claim 4,
wherein when the controller detects that the first time period and the second time period at least partially overlap with each other, the controller changes the second time period such that the second time period does not overlap with the first time period.

7. The receiver of claim 3,
wherein when the controller detects that contents of a currently-viewed channel are recorded, based on settings made on the second and third setting screens and a viewer's operation, the controller plays back the contents from the beginning.
